# DEMANDE DE BREVET EUROPEEN

(11) **EP 2 166 460 A1**
(43) Date de publication de la demande: **24.03.2010**
(21) Numéro de dépôt: 08305558.2
(22) Date de dépôt: 17.09.2008
(51) Int. Cl.: G06F 17/30, G06F 17/27

(54) **Procédé et outil de recherche pour groupes d'utilisateurs**

(71) Demandeur: AIRBUS France, 31060 Toulouse Cedex 9 (FR)
(72) Inventeur: Manet, Julien, 31330, GRENADE (FR); Riou, Marina, 31820, PIBRAC (FR)
(74) Mandataire: den Braber, Gerard Paul

(57) **Abrégé**

Procédé de recherche pour rechercher dans une pluralité de sources des éléments de données, comprenant les étapes consistant à recevoir (300) une requête d'un utilisateur et associer (301) un groupe utilisateur correspondant à l'utilisateur ou à la requête, soumettre (302) ladite requête à un requêteur (204) d'un outil de recherche, ladite requête étant soumise d'une part (310) à une base de données communautaire (210, 211, 212) correspondant au groupe utilisateur associé, cette base contenant une pluralité d'éléments de données mis en communs sur la base de critères établis en fonction dudit groupe utilisateur, et d'autre part (320) à une base lexique communautaire (221, 222, 223) associée à ladite base de données communautaire de ce groupe, la base lexique communautaire d'un groupe d'utilisateurs donné comportant un index établi à partir de l'ensemble des éléments de données de la base de données communautaire de ce même groupe d'utilisateurs. L'invention comprend par ailleurs l'outil de recherche correspondant.

## Description

### DOMAINE TECHNIQUE DE L'INVENTION

L'invention concerne un procédé et un outil pour rechercher dans une pluralité de sources de données des éléments de données (documents, fichiers, données, etc), en fonction de groupes utilisateurs spécifiques.

Ce procédé et cet outil sont particulièrement utiles dans le domaine de la recherche d'information au profit d'une communauté d'utilisateurs et plus particulièrement dans le domaine des moteurs de recherche.

### ETAT DE LA TECHNIQUE ANTERIEURE

Une des principales difficultés rencontrées par l'utilisateur d'un moteur de recherche réside dans le fait de pouvoir saisir correctement les termes recherchés dans le système d'information mis à sa disposition.

Ce problème prend une dimension particulière pour les groupes d'utilisateurs partageant des sources de données communes et/ou ayant des besoins spécifiques similaires en termes de requêtes ou de besoins.

Dans le cas de groupes oeuvrant dans certains domaines techniques spécialisés, les termes utilisés pour formuler les requêtes sont souvent techniquement complexes avec une orthographe présentant souvent des difficultés. On retrouve par ailleurs de nombreux mots peu courants dont l'orthographe est parfois mal connue. Ces difficultés, à priori anodines, sont en fait de premier ordre dans le secteur des outils de recherche, car si un terme est mal orthographié, il y a un risque réel que les documents correspondants ne soient pas identifiés lors d'une recherche. L'utilisateur peut alors croire, de façon erronée, qu'il n'existe pas de document pertinent.

Pour pallier ces inconvénients, plusieurs types d'outils correcteurs d'orthographe ont été développés. Ces outils visent en général à proposer le mot de remplacement le plus pertinent. Classiquement, avec de tels outils, les problèmes suivants surviennent : aucun mot pertinent n'est identifié, le ou les termes identifiés sont par la suite rejetés par l'utilisateur, trop de mots sont proposés, confondant l'utilisateur dans des choix longs à effectuer. Ce dernier point est surtout un problème quand il s'agit de rechercher dans des sources dont le contenu est très volumineux, ce qui est de plus en plus souvent le cas puisqu'il est courant d'effectuer des recherches dans des sources de plusieurs téraoctets.

Quelques solutions classiques sont offertes par les outils de recherche destinés au grand public. Par exemple, un des principaux moteurs de recherche offre une solution consistant à proposer un ou des termes de remplacement avant d'effectuer la recherche. Une phrase du type « essayez avec cette orthographe» ("did you mean", en anglais) accompagne le ou les termes proposés. Un tel outil permet de corriger les fautes d'orthographe concernant des termes du langage courant. Mais quand il s'agit des termes techniques décrivant des objets ou des actions partagés au sein d'une communauté d'utilisateurs ayant un haut niveau d'expertise, la fonction risque de ne pas trouver de terme de remplacement pertinent pour un utilisateur membre de ce groupe, ou de proposer un terme inexact. Ceci est dû au fait que les candidats passés en revue par le système ne ressortent pas du contexte du travail du groupe. D'autre part, une telle solution présente souvent trop des termes de remplacement. Enfin, autre inconvénient majeur, tout le contenu dans lequel l'utilisateur est susceptible de rechercher doit être indexé au préalable par le moteur de recherche. Cet aspect est particulièrement contraignant compte tenu de la multiplicité des sources mises à disposition de nos jours et du volume de données à traiter.

On connaît aussi les correcteurs d'orthographe spécifiques pour chaque Système de Gestion de Bases de Données (SGBD). Un tel correcteur d'orthographe doit s'appliquer à toute source de façon cohérente, se servant du même lexique, indépendamment du nombre de sources, de leurs contenus, de leurs structures ou de leurs localisations, ou si elles possèdent un correcteur ou non. Toutes ces exigences sont contraignantes, voire parfois contradictoires, et donc difficiles à satisfaire en même temps.

Ainsi de nombreuses difficultés techniques demeurent insurmontées pour fournir à un outil de recherche performant les données les plus pertinentes en fonction d'une requête donnée.

Une de ces difficultés concerne l'accroissement du temps de recherche. Pour les utilisateurs effectuant régulièrement des requêtes, une augmentation du temps de réponse de quelques secondes peut suffire à rendre un outil inefficace ou inexploitable à grande échelle.

### EXPOSE DE L'INVENTION

Pour éviter ces différents inconvénients, l'invention prévoit un procédé de recherche d'au moins un élément de données dans une pluralité de sources, comprenant les étapes consistant à :
- recevoir une requête d'un utilisateur;
- soumettre ladite requête à un requêteur d'un outil de recherche apte à chercher dans une pluralité de sources ;
- identifier un groupe d'utilisateur associé à ladite requête ou audit utilisateur ;
- interroger une base de données communautaire correspondant au groupe utilisateur associé, cette base contenant une pluralité d'éléments de données mis en communs sur la base de critères établis en fonction dudit groupe utilisateur.

Cette solution permet de détecter l'appartenance à un groupe d'utilisateurs, de proposer à l'utilisateur membre de ce groupe des résultats de recherche adaptés par rapport à la communauté de l'utilisateur en accédant à un lexique de termes propres à celle-ci pour y trouver le terme recherché.

On peut ainsi fournir à l'utilisateur les éléments de données qui, tout en répondant à la requête, correspondent bien à ses critères et/ou ses besoins.

Selon un mode de réalisation avantageux, le procédé comprend par ailleurs une étape consistant à interroger une base lexique communautaire associée à ladite base de données communautaire du groupe identifié, la base lexique communautaire d'un groupe d'utilisateurs (GU) donné comportant un index de base lexique établi à partir de l'ensemble des éléments de données de la base de données communautaire de ce même groupe d'utilisateurs.

Ce mode de réalisation permet d'améliorer la requête même si la base de données dans laquelle la requête est dirigée ne dispose pas d'un lexique. Le lexique de la communauté est consulté.

Le procédé permet également d'éviter les silences (résultats pertinents non fournis) et les bruits (nombreux résultats non pertinents fournis). On obtient plutôt une liste courte des mots pertinents au groupe.

Enfin, puisque la recherche est effectuée uniquement dans une base de données pertinente, le procédé permet une réduction du temps de recherche et une accélération de l'obtention d'un résultat pertinent.

Selon un autre mode de réalisation avantageux, la requête est formatée en deux sous-requêtes, l'une pour envoi à la base lexique communautaire (BLC) pour effectuer une recherche syntaxique sur les éléments significatifs de la requête, l'autre pour envoi à la base de données communautaire (BDC), pour effectuer une recherche des éléments de données (documents, fichiers, données, etc) susceptibles de répondre à la requête.

La recherche syntaxique permet d'optimiser les probabilités que la recherche, malgré d'éventuelles fautes d'orthographe, puisse donner lieu à des résultats pertinents. Puisque la base syntaxique est construite à partir de la base de données de la communauté, celle-ci ne contient que des termes pertinents pour les utilisateurs de ce groupe. La séparation de la requête permet donc d'une part de traiter les éventuelles incohérences d'ordre syntaxique de façon optimale, tout en assurant une recherche dans une base de données très pertinente pour l'utilisateur. En fonction du retour éventuel dû à la sous-requête pour la base lexique, l'utilisateur peut ensuite, à son choix, remplacer, ignorer ou éditer un terme proposé qu'il juge pertinent pour une éventuelle requête améliorée. Par ailleurs, l'utilisation de la base lexique spécifique permet de proposer à l'utilisateur des termes qui sont pertinents pour la base de données utilisée pour la recherche. Enfin, la recherche étant effectuée en parallèle de la vérification syntaxique, l'utilisateur reçoit des résultats de recherche quoi qu'il en soit : si la requête ne contient pas d'erreur, il n'y a pas de perte de temps due à la recherche syntaxique, et si la requête contient un terme erroné qui se trouve également dans la base de données, ce terme est retrouvé, sans perte de temps ou d'efficacité.

Le procédé permet donc d'effectuer une recherche fédérée parmi deux sources, l'une de type base de donnée, l'autre de type lexique, la seconde étant conçue spécifiquement à partir de la première.

Selon un exemple de réalisation, la sous-requête transmise à la base lexique communautaire (BLC) permet l'obtention de mots dont l'orthographe est identique ou sensiblement voisine de celle des mots de la requête.

Les retours éventuels liés à la sous-requête effectuée dans la base lexique communautaire permettent, dans le cas où aucune mise en correspondance à l'identique ne peut être effectuée dans la base lexique pertinente au groupe, d'identifier dans la base lexique communautaire des termes se rapprochant du terme de la requête. Les termes sont sélectionnés de préférence par leur similitude sur le plan orthographique. Cette sous-requête permet d'identifier des mots avec une orthographe semblable originant de la base lexique associée au groupe concerné. Ainsi, l'utilisateur peut choisir d'utiliser ces termes suggérés pour préciser ou reformuler sa requête avec un ou plusieurs mots qui sont véritablement significatifs pour ce groupe d'utilisateurs. La requête corrigée soumise à l'outil de recherche permettra d'obtenir des résultats plus pertinents pour cet utilisateur.

L'invention prévoit également un outil de recherche comportant :
- une interface utilisateur, pour recevoir des requêtes d'utilisateurs et pour transmettre les résultats obtenus en fonction de ces requêtes ;
- un requêteur;
- au moins une base de données communautaire,
- un module de liaison, permettant d'associer un utilisateur donné ou une requête à au moins un groupe d'utilisateurs (GU) ;
- des bases de données communautaires dédiées auxdits groupes d'utilisateurs (GU).

Selon un premier aspect, l'outil de recherche comprend, pour chaque base de données communautaire (BDC), une base lexique communautaire conçue à partir des données de la base de données communautaire (BDC) correspondante.

Un tel outil permet d'effectuer un traitement qui ne dépend pas d'une source quelconque, qu'elle soit structurée (avec index) ou non, qu'elle contienne le terme recherché dans son contenu ou non, qu'elle possède son propre correcteur d'orthographe ou non.

Selon un autre aspect de l'outil de recherche, une base de données communautaire BDC d'un groupe d'utilisateurs GU donné comprend les données d'une pluralité de sources de données répondant à au moins un critère permettant de distinguer ce groupe d'utilisateurs des autres groupes.

Selon un autre aspect de l'invention, une base lexique communautaire BLC d'un groupe d'utilisateurs GU donné comporte un index de base lexique établi à partir des éléments de données de la base de données communautaire BDC de ce même groupe d'utilisateurs.

Cette base lexique comporte donc un index de base lexique dont le contenu est assurément pertinent pour un groupe d'utilisateurs donné car l'index est généré à partir des éléments de données contenus dans les différentes sources de la base de données communautaire. Les éléments de données correspondants à l'index ne sont eux-mêmes pas repris dans la base lexique. De manière avantageuse, des verrous permettent d'éviter toute ré-indexation non volontaire.

Le requêteur est avantageusement adapté pour générer, pour chaque requête, deux sous-requêtes, l'une pour envoi à la base lexique communautaire BLC pour effectuer une recherche syntaxique sur les éléments significatifs de la requête, l'autre pour envoi à la base de données communautaire BDC, pour effectuer une recherche des éléments (documents, fichiers, données, etc) susceptibles de répondre à la requête.

La sous-requête destinée à la base de données communautaire permet l'obtention de résultats, peu importe que les termes de la requête soient correctement orthographiés ou pas. Par exemple, on peut obtenir une liste de résultats (à plat, catégorisée ou clustérisée) correspondant aux termes recherchés. L'utilisateur peut accepter, éditer ou rejeter ces suggestions et relancer la recherche.

L'invention prévoit également un support d'informations lisible par un système informatique, éventuellement amovible, totalement ou partiellement, notamment CD-ROM ou support magnétique, tel un disque dur ou une disquette, ou support transmissible, tel un signal électrique ou optique, comportant des instructions d'un programme d'ordinateur permettant la mise en oeuvre du procédé de recherche présenté préalablement, lorsque ce programme est chargé et exécuté par un système informatique.

L'invention prévoit enfin un programme d'ordinateur stocké sur un support d'information, ledit programme comportant des instructions permettant la mise en oeuvre du procédé de recherche présenté préalablement, lorsque ce programme est chargé et exécuté par un système informatique.

### DESCRIPTION DES FIGURES

La présente invention est illustrée par des exemples non limitatifs sur les figures jointes, dans lesquelles des références identiques indiquent des éléments similaires:
- la figure 1 illustre schématiquement un exemple d'appareil permettant d'implémenter l'invention ;
- la figure 2 illustre schématiquement un exemple de différents modules permettant l'utilisation de l'invention;
- la figure 3 présente les étapes clés du procédé selon l'invention.

### DESCRIPTION DETAILLEE DE L'INVENTION

Dans le présent document, les termes suivants sont utilisés avec les significations suivantes :

On entend par « recherche fédérée » une recherche effectuée avec une pluralité de sources. Le but d'un moteur de recherche en entreprise ou dans un groupe quelconque consiste à fournir un accès simple et rapide aux informations distribuées sur le réseau de l'entreprise ou du groupe. Le réseau peut comporter des sources d'informations qui sont internes (ex : base de données ou de documents, espace partagés comportant des dossiers et des fichiers, site intranet) ou externes (ex : fournisseurs d'information, sites Internet, etc). Un tel moteur va interroger en parallèle, c'est à dire dans le même temps, plusieurs sources, rassembler les résultats de cette recherche, et les trier afin de présenter sur une page l'ensemble des résultats. « Fédérer » signifie donc interroger plusieurs sources en même temps pour présenter les résultats comme un ensemble.

Dans un tel contexte, les index propres à ces différentes sources peuvent être utilisés : on peut parler dans ce cas d'un « méta-moteur » de recherche. Au cas où une source ne serait pas déjà indexée, le méta-moteur peut comporter une fonction d'indexation propre. Dans ce cas, l'index sera créé et hébergé par le méta-moteur et utilisé en même temps que le méta-moteur demande aux sources interrogées d'utiliser les leurs. Peu importe la localisation ou l'appartenance de l'index, le moteur lance des recherches simultanées et fédère les résultats.

On entend par « requête de type SQL » (en anglais « Structured Query Language » ou langage structuré de requêtes), une requête effectuée dans un pseudo-langage informatique (de type requête) standard et normalisé. Les requêtes de type SQL sont avant tout destinées aux interrogations de bases de données relationnelles.

De façon classique, on entend par « index » une liste de descripteurs à chacun desquels est associée une liste de documents. Ainsi, un index rassemble une liste de termes extraits des documents et auxquels ces derniers sont associés. Par conséquent, la recherche d'un élément de données est alors réalisée dans l'index ce qui permet de retrouver plus rapidement les documents en question. Un index peut prendre la forme d'une liste à plat des termes extraits de ces documents. De nombreux algorithmes permettent d'effectuer les tâches d'extraction des descripteurs. Les algorithmes recherchent les mots les plus fréquents, laissant de côté les mots d'articulation tels que « le » « la », « et », etc.

Dans certains cas, un index peut inclure des éléments de pondération afin de permettre un classement (« ranking » en anglais) des documents lors d'une recherche. Le but consiste alors à attribuer différents poids à des documents, afin de permettre d'établir des priorités selon le contenu informationnel des documents.

On entend par « index de base lexique » l'ensemble des termes correctement orthographiés sur la base desquels se fait la recherche syntaxique.

Un document peut être décrit ou caractérisé par des « métadonnées » pour faciliter leur recherche, la compréhension du contexte, l'utilisation et la gestion.

On entend par « communauté » ou « groupe d'utilisateurs » une pluralité de personnes partageant des informations communes pouvant par exemple présenter un degré d'importance, de pertinence ou d'intérêt plus élevé pour eux que pour des personnes hors de ce groupe. Ainsi, une communauté est définie par l'information ou les données partagées entre ses membres et le contexte de ce partage. Un groupe d'utilisateurs peut parfois se définir lui-même et les personnes concernées s'associent par exemple dans le cadre de leur univers professionnel. L'information à partager peut être un sous-ensemble du système d'information d'une entreprise, mis à disposition de ce groupe sur le réseau de l'entreprise. Dans les entreprises, les groupes utilisateurs travaillent généralement sur une partie du produit final de l'entreprise ou encore sur l'infrastructure transverse de l'entreprise telle que la technologie, l'outillage, etc. Selon une forme illustrative de l'invention, un groupe axé sur un produit se définit par la convergence de trois axes : le produit en question, le métier ou centre d'intérêt professionnel des utilisateurs du groupe, la place dans le processus de réalisation du produit. Un groupe axé sur le support à l'infrastructure de l'entreprise travaille sur les mêmes types d'activités d'organisation, de processus ou d'outillage. On comprend ainsi que le contexte et le vocabulaire d'un groupe sont fonction de ses objectifs. Les groupes auront des champs lexiques de termes parfois très techniques et qui leur sont propres.

Il existe plusieurs possibilités de stockage des données d'une source. Elles peuvent être mises en rapport dans des structures formelles, avec un index ou dans des structures moins formelles sans index particulier. On trouve des bases de données relationnelles, indexées et gérées par un Système de Gestion de Bases de Données (SGBD), des bases documentaires avec métadonnées permettant de caractériser les documents originaux stockés dans la source. On trouve des informations stockées en forme de contenus dans des structures plus informelles, moins structurées, telles que des espaces partagés (serveurs de fichiers) de type dossiers ou mis en réseau par des liens hypertexte, qui sont sans index particulier. Les données peuvent se trouver dans des fichiers XML, ou autres. Les données peuvent aussi se trouver dans des documents de différents formats (tels que PDF, doc, xls, en langue naturelle, etc) ou dans des fichiers multimédia tels que des images, des fichiers son, vidéo, etc.

Parmi cette très vaste quantité d'éléments de données, un groupe d'utilisateurs donné, par exemple une communauté de concepteurs, n'a besoin d'accéder qu'à une partie desdits éléments, formant un sous-ensemble donné. Le sous-ensemble se constitue lors du choix des sources et du choix de filtrage de certains types d'information au sein de chaque source. De tels sous-ensembles vont permettre de constituer des bases de données communautaires. Typiquement, une base de données communautaire se décline par type de sources : thésaurus métier, fournisseurs d'information, sites internet sélectionnés sur la base de critères donnés, base de documents, base transactionnelles pour la capture des données à toute étape d'un processus métier, espaces partagés, etc.

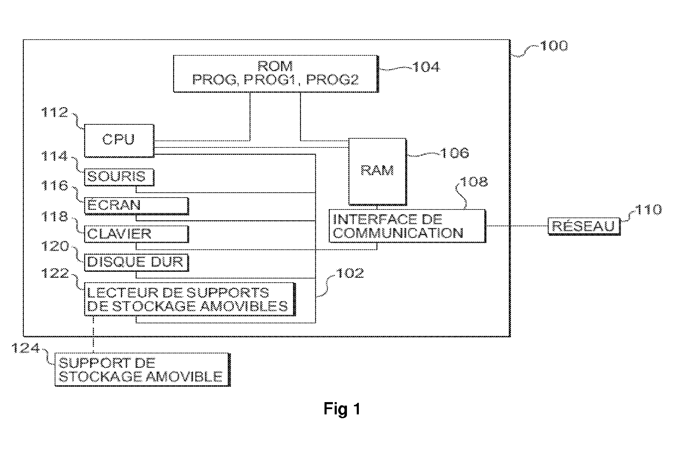

La figure 1 illustre un exemple d'appareil 100 adapté à mettre en oeuvre l'invention, tel qu'un micro-ordinateur ou une station de travail. De préférence, l'appareil 100 comporte un bus de communication 102 auquel sont reliés : une unité centrale de traitement 112 telle qu'un microprocesseur ; une mémoire morte 104 ou en anglais Read Only Memory (ROM), pouvant comporter un ou plusieurs programmes « Prog », « Prog1 » et « Prog2 » ; une mémoire vive 106 ou en anglais Random Access Memory (RAM), comportant des registres adaptés à mémoriser des variables et des paramètres créés et modifiés au cours de l'exécution des programmes précités ; et, une interface de communication 108 reliée à un réseau de communication distribué 110, par exemple l'Internet ou un réseau intranet, l'interface étant apte à transmettre et à recevoir des données.

L'appareil 100 peut disposer optionnellement de l'un, de plusieurs ou de tous les dispositifs suivants : un écran 116 permettant de visualiser des données et/ou de servir d'interface graphique avec l'utilisateur qui pourra interagir avec les programmes selon l'invention, à l'aide d'un clavier 118 ou de tout autre dispositif, comme par exemple une souris 114 ; un disque dur 120 pouvant comporter des programmes et/ou des données, notamment des données traitées ou à traiter selon l'invention ; un lecteur de supports de stockage amovibles 122 adapté à recevoir un support de stockage amovible 124 et à y lire ou à y écrire des données traitées ou à traiter selon l'invention.

Le bus de communication permet la communication et l'interopérabilité entre les différents éléments inclus dans l'appareil 100 ou reliés à lui. La représentation du bus n'est pas limitative et, notamment, l'unité centrale est susceptible de communiquer des instructions à tout élément de l'appareil 100, directement ou par l'intermédiaire d'un autre élément de l'appareil 100.

Le code exécutable du ou des programmes permettant à l'appareil 100 de mettre en oeuvre les processus selon l'invention, peut être stocké, par exemple, dans le disque dur 120 ou en mémoire morte 104.

Selon une variante, le support de stockage amovible 124, peut contenir des données ainsi que le code exécutable des programmes précités qui, une fois lu par l'appareil 100, peuvent être stockés dans le disque dur 120. Alternativement, le code exécutable des programmes peut être reçu par l'intermédiaire du réseau de communication 110, via l'interface 108, pour être stocké de façon identique à celle décrite précédemment.

Le support de stockage amovible peut être, à titre d'exemple, une disquette, un disque compact (CD-ROM), une clé mémoire, en anglais clé « USB » (pour Universal Serial Bus) ou une carte mémoire. De manière générale, un moyen de stockage d'information, lisible par un ordinateur ou par un microprocesseur, intégré ou non à l'appareil, éventuellement amovible, et adapté à mémoriser un ou plusieurs programmes dont l'exécution permet la mise en oeuvre du procédé selon l'invention.

De manière plus générale, le ou les programmes pourront être chargés dans un des moyens de stockage de l'appareil 100 avant d'être exécutés.

L'unité centrale 112 contrôle l'exécution des instructions ou portions de code logiciel du ou des programmes selon l'invention, instructions qui sont stockées dans le disque dur 120, dans la mémoire morte 104 ou dans les autres éléments de stockage précités. Lors de la mise sous tension, le ou les programmes stockés dans une mémoire non volatile, par exemple le disque dur 120 ou la mémoire morte 104, sont transférés dans la mémoire vive 106 (RAM), qui contient alors le code exécutable du ou des programmes selon l'invention, ainsi que des registres pour mémoriser les variables et les paramètres nécessaires à la mise en oeuvre de l'invention.

Il convient de noter que l'appareil comportant le dispositif selon l'invention peut également être un appareil programmé. Les instructions du ou des programmes mettant en oeuvre l'invention peuvent, par exemple, être implémentées dans un circuit intégré programmable ou spécifique (Application-Specific Integrated Circuit, ASIC en anglais).

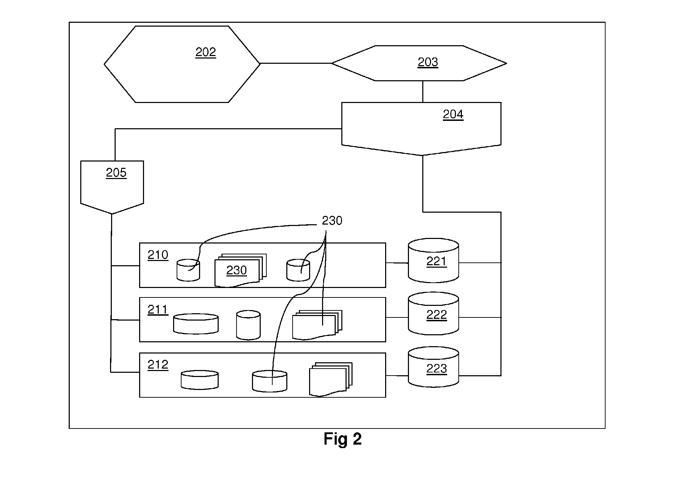

La figure 2 illustre schématiquement un exemple de différents modules permettant l'utilisation de l'invention. Ainsi, selon un mode préférentiel de mise en oeuvre, l'outil de recherche selon l'invention comporte une interface utilisateur 202 permettant à l'utilisateur d'interagir avec l'outil, que ce soit pour entrer ou formuler une requête, ou recevoir les résultats suite à une recherche. Un module de liaison 203 permet de déterminer si un utilisateur donné appartient à un groupe d'utilisateurs, et si oui, quel groupe est concerné, et/ou d'associer ou lier cet utilisateur au groupe en question afin que lors de la phase de recherche, la base de données du groupe concerné soit consultée (les autres bases étant ignorées). Selon une variante de réalisation, ce module peut aussi être utilisé pour lier ou associer une requête à un groupe d'utilisateur donné. Un requêteur 204 permet de formater les requêtes reçues des utilisateurs de façon compatible avec les sources à consulter. Par exemple, des requêtes de type SQL permettent d'interroger un très grand nombre de sources couramment utilisées.

Une pluralité de Bases de Données Communautaires 210, 211, 212, (BDC) permettent le stockage des éléments de données susceptibles de faire l'objet de recherches par les utilisateurs. Divers types de sources 230 peuvent être contenus dans chaque base. Ces bases sont établies en fonction des besoins des groupes d'utilisateurs, qui peuvent être exprimés sous la forme de critères. Par exemple, il peut s'agir de centres d'intérêts communs, de domaines techniques particuliers, de thèmes tels que sports, loisirs, activité cultuelle donnée, etc. Chacune des sources 230 des bases peut être indexée ou non. A chaque base de données communautaire 210, 211, 212 correspond une Base Lexique Communautaire 221, 222, 223 (BLC). Chacune de ces bases lexiques comprend un index de base lexique constitué sur la base des éléments de données contenus dans la base de données communautaire correspondante. Ainsi, même si certaines sources d'une base de données communautaire ne sont pas indexées, l'index de la base lexique correspondante permet une indexation de tous les éléments de la base communautaire. Les bases lexiques étant conçues à partir de contenus spécifiques architecturés en fonction d'un groupe d'utilisateur, les bases lexiques correspondantes sont par conséquent directement liées aux choix, critères et contenus des bases de ces utilisateurs. Selon une variante de réalisation, une ou plusieurs bases lexiques comportent des index de base lexique correspondant uniquement à une portion sélectionnée de la base de données communautaire correspondante. Un ou plusieurs utilisateurs peuvent, préalablement à une requête, effectuer la sélection des éléments de données et/ou des sources concernées par l'indexation. Au moins un connecteur 205 permet d'assurer une liaison entre le requêteur 204 et les bases de données communautaires. L'outil de recherche de la figure 2 peut bien évidemment être modifié, tout en remplissant les mêmes fonctions.

Le procédé et l'outil fonctionnant à l'aide de communautés ou groupes d'utilisateurs, les sources d'information sont donc sélectionnées ou filtrées par l'outil de recherche préalablement à la réalisation de la recherche, en fonction du groupe utilisateur concerné. Par exemple, si un groupe d'utilisateur d'une entreprise a accès au système d'informations de celle-ci et que ce système contient certaines sources de données auxquelles le groupe n'est pas associé, ces dernières sources ne sont pas prises en compte lors d'une recherche. En effet, ces sources sont hors du domaine du groupe et ne sont pas pertinentes pour les recherches effectuées par les utilisateurs de ce groupe. Prendre en compte de telles sources ne ferait qu'allonger le temps de recherche et procurer d'éventuels résultats non pertinents. On obtient ainsi un domaine de recherche ouvert à l'utilisateur grâce son identification, confirmant son appartenance au groupe d'utilisateur considéré.

Un pré-filtrage des sources du groupe peut également être effectué. Une telle étape peut s'avérer avantageuse si une source contient des éléments hétérogènes dont une portion importante des documents se situe dans des secteurs qui sont hors des champs d'intérêt du groupe concerné. Par exemple, une source contient un vaste ensemble d'éléments : le pré-filtrage élimine ceux non-pertinents par rapport aux intérêts de la communauté. On peut effectuer un pré-filtrage par document type, où les informations en entrée ou sortie d'une activité (une étape dans un processus) peuvent être stockées dans des documents par type.

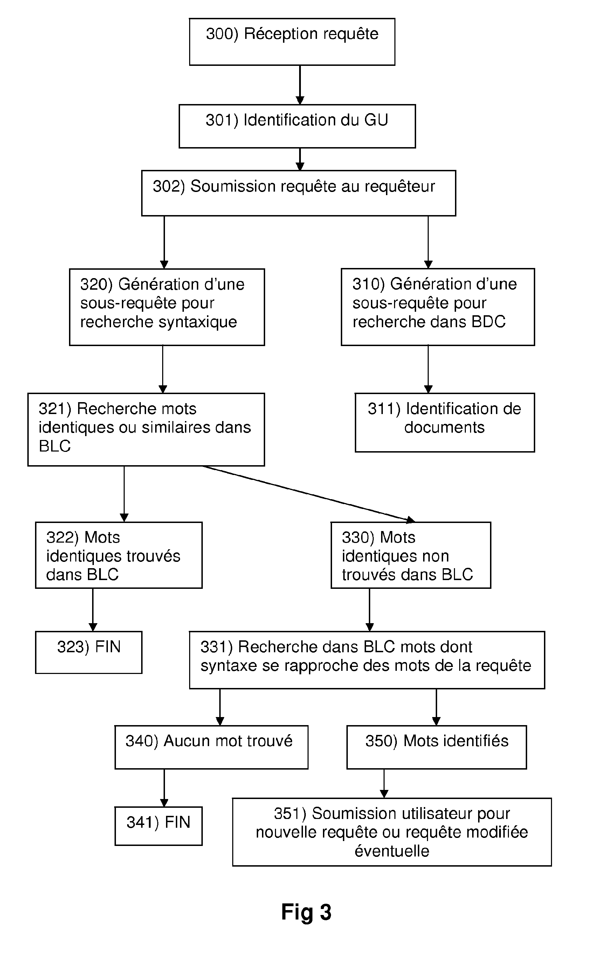

La figure 3 présente un exemple de mise en oeuvre du procédé de recherche selon l'invention. Après réception de la requête à l'étape 300, l'étape 301 consiste à déterminer quel groupe utilisateur devra être considéré. On considère alors soit l'utilisateur, par exemple en fonction de son identifiant et/ou d'un mot de passe, soit la requête de cet utilisateur. Une fois le groupe utilisateur identifié, la requête destinée à ce groupe utilisateur est soumise au requêteur (étape 302). Ce dernier génère deux sous-requêtes : l'une destinée à effectuer une recherche dans la base de données communautaire du groupe identifié (étape 310), l'autre destinée à une recherche syntaxique (étape 320). Chaque sous-requête est soumise à une base distincte : la sous-requête syntaxique est soumise à la base lexique communautaire du groupe, tandis que la sous-requête de recherche est soumise à la base de données communautaire du groupe concerné.

Ces deux étapes se déroulent de préférence en parallèle, sans perte de temps. La recherche dans la base de données communautaire permet d'identifier les éléments de données pertinents et de les fournir à l'utilisateur.

La recherche syntaxique permet, en cas d'erreur d'orthographe, d'identifier des termes proches du terme erroné, en se basant sur l'index de base lexique du groupe concerné (étape 321). Ainsi, si un terme identique au terme de la requête existe dans la base lexique, on déduit qu'il n'y a pas d'erreur (étapes 322 et 323). Aucun mot n'est suggéré à l'utilisateur. Un éventuel message d'absence d'erreur peut être transmis à l'utilisateur.

Si aucun terme de la base lexique ne correspond à celui de la sous-requête (étape 330), une recherche de terme proche est effectuée dans la base lexique (étape 331). Les termes identifiés sont fournis à l'utilisateur, qui peut alors décider de prendre en compte ou pas ces données pour préciser l'objet de sa recherche ou reformuler sa requête (étapes 350 et 351).

Si aucun terme voisin n'est trouvé, aucune suggestion n'est faite à l'utilisateur (étapes 340 et 341). Un éventuel message peut être envoyé informant l'utilisateur de ce fait.

Voici un exemple détaillé de déroulement du procédé, dans lequel un utilisateur effectue les opérations suivantes :

-il se connecte au moteur de recherche à travers son interface, par exemple son navigateur Internet ;

-l'utilisateur est reconnu, par exemple grâce à son mot de passe, un code utilisateur, ou encore par un système de reconnaissance automatique tel qu'un « cookie » ;

- une fois l'utilisateur authentifié, on détermine son appartenance à un groupe. Une base de données communautaire BDC, éventuellement des filtres et d'autres options de traitement choisis pour le groupe peuvent être associés à ce groupe ;

-l'utilisateur indique les termes de sa recherche, par exemple en renseignant un formulaire « html », puis il lance la recherche (il est à noter que cette étape et celle de l'identification peuvent être inversées ou jointes) ;

-le système informatique utilisé traduit les contenus de ce formulaire en deux requêtes « SQL » structurées (opérateurs booléens et valeurs) ;

-l'une est envoyée à la base lexique ;

-l'autre est envoyée à la base de donnée communautaire, à travers des connecteurs ;

- dans le cas où aucune correspondance parfaite dans la base lexique pertinente au groupe est possible, la requête de syntaxe permet d'identifier les corrections d'orthographes et d'envoyer des suggestions de mots avec une orthographe semblable, trouvés dans la base lexique associée à ce groupe ;

-l'autre requête permet au moteur de recherche de fournir les résultats de recherche.

Il est à noter que le moteur de recherche répond toujours et va afficher une liste de résultats (à plat, catégorisée ou clustérisée) correspondant aux termes recherchés, que ces termes soient mal orthographiés ou non ;
- enfin, l'utilisateur peut accepter, éditer ou rejeter ces suggestions et relancer la recherche.

Lorsqu'un ou plusieurs termes recherchés ne sont pas retrouvés à l'identique lors de l'étape de recherche syntaxique, la correction orthographique est appliquée. De préférence, tous les termes saisis par l'utilisateur pour formuler la requête sont recherchés. Selon une mise en oeuvre spécifique, les termes saisis entre doubles guillemets (« ») sont exclus de cette phase de correction orthographique.

Par exemple, imaginons qu'un terme « compisite » soit saisi par un utilisateur au lieu du terme « composite » (dans le domaine des matériaux). L'outil de recherche passe le ou les termes saisis par l'utilisateur, ici compisite, à la phase de correction d'orthographe. Ce dernier lance une requête dans la base orthographique : si aucun mot ne correspond, alors différents types d'algorithmes peuvent être utilisés afin de trouver, dans la base lexique, les mots qui se rapprochent le plus des termes saisis par l'utilisateur. La phase de correction orthographique permet ensuite de fournir à l'utilisateur une liste courte des mots qui se rapprochent le plus du terme erroné, dans cet exemple le mot « composite ». Après réception des termes suggérés, l'utilisateur peut accepter, rejeter ou éditer le ou les mots proposés et ensuite relancer sa requête de recherche.

Il est à noter que l'outil de recherche traite simultanément et indépendamment la sous-requête destinée à identifier les documents ou autres éléments de données pertinents avec la recherche syntaxique. Cette phase est réalisée indépendamment de la recherche syntaxique. Ainsi, peu importe la situation du côté syntaxique, la recherche de documents permet normalement d'obtenir des résultats en tout temps. Selon un cas particulier, il est possible qu'un terme de la requête soit erroné, mais qu'il existe tout de même dans la base de données, par exemple suite à une précédente erreur syntaxique.

La solution selon l'invention est cohérente, évolutive et indépendante des sources d'information. Cette solution peut s'appliquer à toute source dans un système d'informations du groupe concerné puisqu'elle est indépendante des sources elles-mêmes.

Après l'envoi des mots choisis pour formuler la requête, la phase de recherche syntaxique permet de constater d'une part si les mots existent dans la base lexique de référence et si non, quels sont les mots de cette base lexique qui s'en rapprochent le plus.

En pratique, l'utilisateur saisit les termes de la recherche qu'il souhaite effectuer dans le système d'information applicable à son groupe. Toute recherche comporte une phase dans laquelle les termes significatifs de la requête sont comparés à ceux de l'index lexique du groupe concerné. La fonction s'appuie sur un appariement (en anglais « matching ») entre la table des groupes d'utilisateurs et la base des orthographes de référence.

Certains termes sont de préférence exclus de la comparaison : des termes non-techniques, des termes n'appartenant pas à la base particulière du groupe concerné, etc.

Tout terme restant passe par une étape de lemmatisation, qui permet d'identifier la forme standard, à savoir le lemme ou « forme canonique » du terme. Pour les termes où un appariement n'est pas trouvé dans la base, l'algorithme de comparaison procède par un « appariement au plus près » (en anglais « nearest match ») et renvoie le résultat de cet appariement à l'utilisateur.

L'utilisateur peut accepter les suggestions, qu'il peut ensuite éditer ou non, ou il peut ignorer une ou plusieurs de ces suggestions. En cas d'acceptation, le terme de l'utilisateur est alors remplacé par le terme proposé. L'utilisateur peut alors choisir de relancer la recherche.

Les bases lexiques communautaires sont construites à partir des sources des bases de données correspondantes. Elles sont de préférence dynamiques, et peuvent préférablement être mises à jour. Pour procéder à une telle mise à jour, en entrée, on retrouve les sources de données qui constituent la base de données du groupe concerné, tel qu'un thésaurus métier, des fournisseurs d'information, des sites internet, des bases documentaires, des bases de données transactionnelles, des serveurs de fichiers, les informations de l'environnement, etc. En cas de modification, à savoir soit au niveau de la base, ou au niveau des critères du groupe (qui se traduit dans les filtres), une mise à jour de la base lexique du groupe peut être lancée. Au moyen d'une fonction création ou mise à jour d'index, les sources filtrées sont analysées par un parseur afin d'extraire les mots, laissant les termes d'articulation tels que « le », « la », « et ». Une étape éventuelle de validation des nouveaux mots créés peut être prévue.

Pour créer une nouvelle base lexique communautaire, une sélection de sources ou de portions de sources est établie, en fonction des critères de tri ou de filtrage spécifiques au groupe. Cette sélection est utilisée pour établir la base lexique.

Les Figures et leurs descriptions faites ci-dessus illustrent l'invention plutôt qu'elles ne la limitent. En particulier, l'invention et ses différentes variantes viennent d'être décrites en relation avec des exemples particuliers de sources de données. Néanmoins, il est évident pour un homme du métier que l'invention peut être étendue à tout type de source de données.

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

## Revendications

1. Procédé de recherche d'au moins un élément de données dans une pluralité de sources, comprenant les étapes consistant à :
- recevoir (300) une requête d'un utilisateur;
- soumettre (302) ladite requête à un requêteur d'un outil de recherche (1) apte à chercher dans une pluralité de sources ;
**caractérisé en ce qu'**il comprend des étapes consistant à :
- identifier (301) un groupe d'utilisateur associé à ladite requête ou audit utilisateur ;
- interroger une base de données communautaire (210, 211, 212) correspondant au groupe utilisateur associé, cette base contenant une pluralité d'éléments de données mis en communs sur la base de critères établis en fonction dudit groupe utilisateur.

2. Procédé de recherche selon la revendication 1, comprenant par ailleurs une étape consistant à interroger une base lexique communautaire (221, 222, 223) associée à ladite base de données communautaire du groupe identifié, la base lexique communautaire d'un groupe d'utilisateurs (GU) donné comportant un index de base lexique établi à partir de l'ensemble des éléments de données de la base de données communautaire de ce même groupe d'utilisateurs.

3. Procédé de recherche selon la revendication 2, dans lequel ladite requête est formatée en deux sous-requêtes, l'une (320) pour envoi à la base lexique communautaire pour effectuer une recherche syntaxique sur les éléments significatifs de la requête, l'autre (310) pour envoi à la base de données communautaire pour effectuer une recherche des éléments de données susceptibles de répondre à la requête.

4. Procédé de recherche selon la revendication 3, dans lequel la sous-requête transmise à la base lexique communautaire permet l'obtention (321) de mots dont l'orthographe est identique ou sensiblement voisine de celle des mots de la requête.

5. Outil de recherche, comportant :
- une interface utilisateur (202), pour recevoir des requêtes d'utilisateurs et pour transmettre les résultats obtenus en fonction de ces requêtes ;
- un requêteur (204);
- au moins une base de données communautaire (210,211, 212),
**caractérisé en ce qu'**il comprend :
- un module de liaison (203), permettant d'associer un utilisateur donné ou une requête à au moins un groupe d'utilisateurs (GU) ;
- des bases de données communautaires dédiées auxdits groupes d'utilisateurs (GU).

6. Outil de recherche selon la revendication 5, comprenant, pour chaque base de données communautaire (BDC), une base lexique communautaire (221, 222, 223) conçue à partir des données de la base de données communautaire (BDC) correspondante.

7. Outil de recherche selon l'une des revendications 5 ou 6, dans lequel une base de données communautaire (BDC) d'un groupe d'utilisateurs (GU) donné comprend les données d'une pluralité de sources de données (230) répondant à au moins un critère permettant de distinguer ce groupe d'utilisateurs des autres groupes.

8. Outil de recherche selon l'une des revendications 6 ou 7, dans lequel une base lexique communautaire (BLC) d'un groupe d'utilisateurs (GU) donné comporte un index de base lexique établi à partir des éléments de données de la base de données communautaire (BDC) de ce même groupe d'utilisateurs.

9. Support d'informations lisible par un système informatique, éventuellement amovible, totalement ou partiellement, notamment CD-ROM ou support magnétique, tel un disque dur ou une disquette, ou support transmissible, tel un signal électrique ou optique, comportant des instructions d'un programme d'ordinateur permettant la mise en oeuvre du procédé de recherche selon l'une des revendications 1 à 4, lorsque ce programme est chargé et exécuté par un système informatique.

10. Programme d'ordinateur stocké sur un support d'information, ledit programme comportant des instructions permettant la mise en oeuvre du procédé de recherche selon l'une des revendications 1 à 4, lorsque ce programme est chargé et exécuté par un système informatique.
